# FASCICULE DE BREVET EUROPEEN

(11) **EP 1 561 647 B1**
(45) Date de publication et mention de la délivrance du brevet: **30.04.2008**
(21) Numéro de dépôt: 05290229.3
(22) Date de dépôt: 02.02.2005
(51) Int. Cl.: B60R 19/34, B60R 21/34, B62D 65/16

(54) **Doublure de calandre de véhicule automobile**
Kühlergrillhalterung für Kraftfahrzeug
Radiator grille support for vehicle

(30) Priorité: 03.02.2004 FR 0401019
(43) Date de publication de la demande: 10.08.2005
(73) Titulaire: COMPAGNIE PLASTIC OMNIUM, 69007 Lyon (FR)
(72) Inventeur: Roussel, Thierry, 52500 Fayl La Foret (FR)
(74) Mandataire: Remy, Vincent Noel Paul

(56) Documents cités:
- WO-A-03/024747
- FR-A- 2 783 766
- US-A- 5 403 048
- US-A1- 2003 042 055
- PATENT ABSTRACTS OF JAPAN vol. 1998, no. 01, 30 janvier 1998 (1998-01-30) -& JP 09 226625 A (NISSAN MOTOR CO LTD), 2 septembre 1997 (1997-09-02)

## Description

La présente invention concerne une doublure de calandre de véhicule automobile.

L'une des préoccupations actuelles en matière de véhicule automobile est la gestion des divers jeux entre les pièces de carrosseries, dans un souci d'optimisation de l'esthétisme du véhicule et de la fonctionnalité de ces pièces de carrosseries.

On connaît dans l'état de la technique, notamment dans US 5 403 048, une doublure de calandre conforme au préambule de la revendication 1.

Les inventeurs ayant travaillé sur la présente invention ont noté que le jeu entre un bouclier de pare-chocs et une calandre de véhicule automobile ne peut pas être géré de manière simple.

L'invention a notamment pour but de résoudre ce problème.

A cet effet, l'invention a pour objet une doublure d'une calandre, destinée à être positionnée au-dessus d'un bouclier de pare-chocs, ledit bouclier comportant un rebord supérieur, la doublure comportant des moyens pour soutenir le rebord supérieur du bouclier, caractérisé en ce qu'elle comporte des moyens d'absorption d'énergie localisés sur la doublure de manière à se trouver au niveau de la partie haute de la jambe d'un piéton ou de la tête d'un enfant lorsque cette doublure est montée sur le véhicule.

Cette doublure de calandre étant destinée à positionner cette calandre, le fait qu'elle soit utilisée pour soutenir le bouclier permet de gérer de manière simple le jeu entre ce bouclier et la calandre.

De manière optionnelle, les moyens pour soutenir le rebord supérieur du bouclier forment une poutre transversale constituant un appui situé au niveau du fémur de la jambe d'un piéton, lorsque la doublure est montée sur le véhicule. Ainsi, lors d'un choc avec un piéton, la jambe de ce piéton prenant appui sur le rebord supérieur du bouclier ne subit pas de déformation potentiellement dangereuse.

Une doublure d'une calandre selon l'invention peut en outre comporter l'une ou plusieurs des caractéristiques suivantes :
- les moyens pour soutenir le rebord supérieur du bouclier comportent une plage s'étendant sur toute la longueur de la calandre et offrant une surface d'appui pour le rebord supérieur du bouclier ;
- la plage inférieure comporte au moins une nervure longitudinale de renforcement sensiblement perpendiculaire à cette plage inférieure.

Par ailleurs, une doublure de calandre selon l'invention a optionnellement une forme générale épousant sensiblement la forme intérieure de la calandre, afin de rigidifier la calandre de manière à éviter les petites déformations dues à un effort faible appliqué à cette calandre.

Suivant d'autres caractéristiques optionnelles :
- la doublure comporte des moyens de fixation sur le véhicule ;
- les moyens de fixation sur le véhicule sont des moyens de fixation sur une face avant technique du véhicule ;
- les moyens de fixation sur la face avant technique sont susceptibles de se rompre lorsque la doublure subit un effort supérieur à un effort prédéterminé, correspondant à un choc Danner ;
- la doublure présente une forme concave et est conformée de manière à pouvoir s'écraser lorsqu'elle subit un effort supérieur à un effort prédéterminé, correspondant à un choc Danner ;
- la doublure comporte dans sa partie inférieure des extrémités d'appui contre la face avant technique, conformées pour échapper vers le bas ou latéralement en préservant la face avant technique et/ou des organes montés sur celle-ci, comme un radiateur, lorsque la doublure subit un effort supérieur à un effort prédéterminé, correspondant à un choc Danner ;
- la conformation des extrémités d'appui pour échapper vers le bas ou latéralement est telle qu'un effort horizontal exercé sur lesdites extrémités d'appui provoque leur basculement dans une direction souhaitée ;
- les extrémités d'appui ont chacune une forme biseautée.

Ces caractéristiques ont pour avantage de conférer une protection pour la face avant technique qui, en cas de choc Danner, ne sera pas endommagée par un enfoncement de la calandre et de son support.

Suivant d'autres caractéristiques optionnelles :
- les moyens d'absorption d'énergie comportent un réseau de nervures.

Ces caractéristiques ont pour avantage de protéger un piéton en cas de choc piéton.

Enfin, suivant une dernière caractéristique optionnelle, la doublure de calandre est réalisée en matière thermoplastique.

L'invention sera mieux comprise à la lecture de la description qui va suivre, donnée uniquement à titre d'exemple et faite en se référant aux dessins annexés dans lesquels :
- la figure 1 est une vue en coupe longitudinale d'une doublure d'une calandre selon l'invention, montée sur un véhicule automobile ;
- la figure 2 est une vue en perspective de la doublure de calandre de la figure 1.

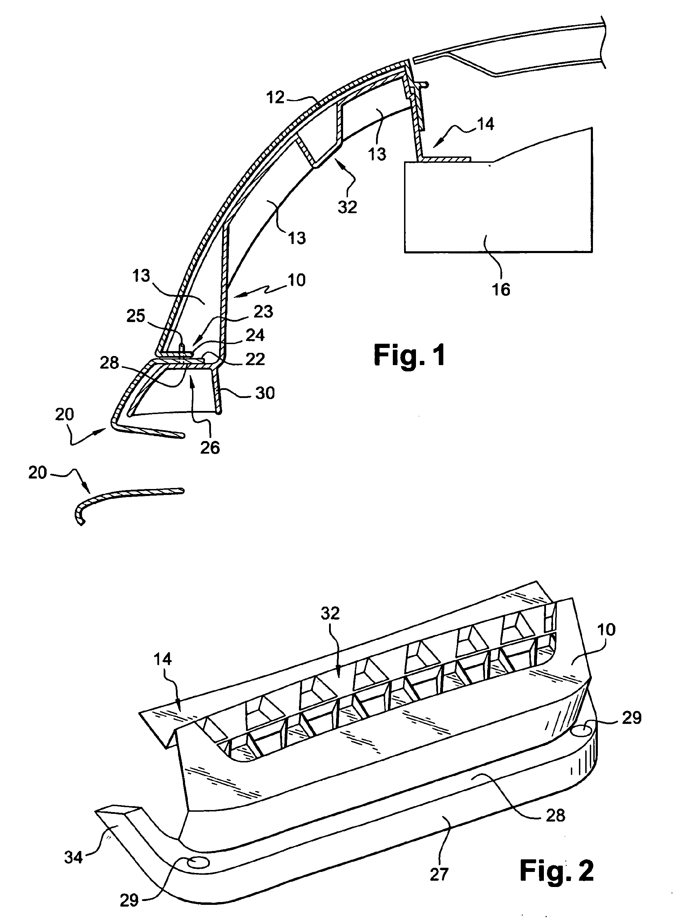

On a représenté sur la figure 1 une doublure 10 d'une calandre 12 de véhicule automobile.

Cette doublure 10, généralement réalisée en matière thermoplastique, comporte des nervures de renfort 13 permettant de la rigidifier et des moyens 14 de fixation sur le véhicule. Selon le mode de réalisation décrit, le véhicule comporte une face avant technique 16, les moyens 14 de fixation sur le véhicule étant des moyens de fixation sur cette face avant technique 16.

Le véhicule comporte en outre un bouclier de pare-chocs 20. Ce bouclier 20 est muni d'un rebord supérieur 22, comportant des moyens de fixation 23 de la calandre 12 sur ce bouclier de pare-chocs 20. Le bord inférieur de la calandre 12 est muni de pattes d'encliquetage 24 à débattement horizontal, les moyens de fixation 23 comportant des orifices, ménagés sur des saillies 25 du rebord supérieur 22, dans lesquels ces pattes d'encliquetage 24 sont destinées à s'encliqueter.

Par ailleurs, la doublure 10 est destinée à être positionnée au-dessus du bouclier de pare-chocs 20, la doublure 10 comportant des moyens 26 pour soutenir le rebord supérieur 22.

En général, les moyens 26 de soutien du rebord supérieur 22 forment une poutre transversale 27, visible sur la figure 2. Cette poutre 27 comporte une plage inférieure 28 s'étendant sur toute la longueur de la calandre 12 et offrant une surface d'appui pour le rebord supérieur 22 du bouclier 20. Ainsi, le rebord supérieur 22 du bouclier 20 est maintenu contre le bord inférieur de la calandre 12.

Afin d'être renforcée, notamment selon une direction verticale, la plage inférieure 28 comporte au moins une nervure longitudinale 30 de renforcement, sensiblement perpendiculaire à cette plage inférieure 28.

Par ailleurs, le bouclier 20 est fixé à la plage inférieure 28 en deux points de fixation 29 à l'aide de deux vis.

On notera que la doublure 10 permet de gérer de manière simple le jeu entre le bouclier 20 et la calandre 12. En effet, ce bouclier 20 et cette calandre 12 sont tous deux portés par la doublure 10.

En plus de gérer le positionnement du bouclier 20 par rapport à la calandre 12, la doublure 10 est susceptible de remplir plusieurs autres fonctions.

Ainsi, la doublure 10 remplit en outre une fonction de renforcement de la calandre 12. Dans cette optique, la doublure 10 a une forme générale épousant sensiblement la forme intérieure de la calandre 12. La calandre 12 est ainsi rigidifiée, afin d'éviter d'éventuelles déformations de cette calandre 12 dues à des efforts faibles appliqués à cette calandre 12.

Par ailleurs, la doublure 10 est réalisée de manière à apporter une protection à un piéton en cas de choc piéton. Dans ce but, la poutre transversale 27 est située au niveau du fémur de la jambe d'un piéton, de manière à former un appui pour ce fémur en cas de choc piéton. Ainsi, la jambe peut prendre appui sur l'avant du véhicule lors d'un choc piéton de manière à ne pas subir de déformations potentiellement dangereuses.

La doublure 10 comporte en outre des moyens 32 d'absorption d'énergie, comportant par exemple un réseau de nervures. Ces moyens 32 d'absorption d'énergie sont localisés au niveau de la partie haute de la jambe d'un piéton ou de la tête d'un enfant lorsque la doublure 10 est montée sur le véhicule.

Par ailleurs, la doublure 10 est réalisée de manière à protéger la face avant technique 16 en cas de choc Danner.

Dans ce but, on notera que les moyens de fixation 14 de la doublure 10 sur la face avant technique 16 sont susceptible de se rompre lorsque cette doublure 10 subit un effort supérieur à un effort prédéterminé, correspondant à un choc Danner. L'énergie correspondant au choc Danner n'est donc pas retransmise à la face avant technique 16 par l'intermédiaire de ces moyens de fixation 14.

Par ailleurs, la doublure 10 présente une forme concave, conformée de manière à pouvoir s'écraser lorsqu'elle subit un effort correspondant à un choc Danner.

La doublure 10 comporte enfin dans sa partie inférieure des extrémités d'appui 34 contre la face avant technique 16. Ces extrémités d'appui 34 présentent chacune une forme biseautée, de manière à pouvoir basculer vers le haut ou latéralement et échapper lorsqu'un effort horizontal est exercé sur lesdites extrémités d'appui 34, comme par exemple en cas de choc Danner. La face avant technique 16 est ainsi épargnée en cas de choc Danner.

## Revendications

1. Doublure (10) d'une calandre (12), destinée à être positionnée au-dessus d'un bouclier (20) de pare-chocs, ledit bouclier (20) comportant un rebord supérieur (22), la doublure comportant des moyens (26) pour soutenir le rebord supérieur (22) du bouclier, **caractérisé en ce qu'**elle comporte des moyens (32) d'absorption d'énergie localisés sur la doublure (10) de manière à se trouver au niveau de la partie haute de la jambe d'un piéton ou de la tête d'un enfant lorsque cette doublure (10) est montée sur le véhicule.

2. Doublure (10) d'une calandre (12) selon la revendication 1, dans laquelle les moyens (26) pour soutenir le rebord supérieur (22) du bouclier (20) forment une poutre transversale (27) constituant un appui situé au niveau du fémur de la jambe d'un piéton, lorsque la doublure (10) est montée sur le véhicule.

3. Doublure (10) d'une calandre (12) selon la revendication 1 ou 2, dans laquelle les moyens (26) pour soutenir le rebord supérieur (22) du bouclier (20) comportent une plage inférieure (28) s'étendant sur toute la longueur de la calandre (12) et offrant une surface d'appui pour le rebord supérieur (22) du bouclier (20).

4. Doublure (10) d'une calandre (12) selon l'une quelconque des revendications précédentes, dans laquelle la plage inférieure (28) comporte au moins une nervure longitudinale (30) de renforcement sensiblement perpendiculaire à cette plage inférieure (28).

5. Doublure (10) d'une calandre (12) selon l'une quelconque des revendications précédentes, ayant une forme générale épousant sensiblement la forme intérieure de la calandre (12).

6. Doublure (10) d'une calandre (12) selon l'une quelconque des revendications précédentes, comportant des moyens (14) de fixation sur le véhicule.

7. Doublure (10) d'une calandre (32) selon la revendication 6, dans laquelle les moyens (14) de fixation sur le véhicule sont des moyens de fixation sur une face avant technique (16) du véhicule.

8. Doublure (10) d'une calandre (12) selon la revendication 7, dans laquelle les moyens de fixation (14) sur la face avant technique (16) sont susceptibles de se rompre lorsque la doublure (10) subit un effort supérieur à un effort prédéterminé, correspondant à un choc Danner.

9. Doublure (10) d'une calandre (12) selon l'une quelconque des revendications précédentes, présentant une forme concave et étant conformée de manière à pouvoir s'écraser lorsqu'elle subit un effort supérieur à un effort prédéterminé, correspondant à un choc Danner.

10. Doublure (10) d'une calandre (12) selon l'une quelconque des revendications 7 à 9, comportant dans sa partie inférieure des extrémités d'appui (34) contre la face avant technique (16), conformées pour échapper vers le bas ou latéralement en préservant la face avant technique (16) et/ou des organes montés sur celle-ci, comme un radiateur, lorsque la doublure (10) subit un effort supérieur à un effort prédéterminé, correspondant à un choc Danner.

11. Doublure (10) d'une calandre (12) selon la revendication 10, dans laquelle la conformation des extrémités d'appui (34) pour échapper vers le bas ou latéralement est telle qu'un effort horizontal exercé sur lesdites extrémités d'appui (34) provoque leur basculement dans une direction souhaitée.

12. Doublure (10) d'une calandre (12) selon la revendication 11, dans laquelle les extrémités d'appui (34) ont chacune une forme biseautée.

13. Doublure (10) d'une calandre (12) selon la revendication 1, dans laquelle les moyens (34) d'absorption d'énergie comportent un réseau de nervures.

14. Doublure (10) d'une calandre (12) selon l'une quelconque des revendications précédentes, réalisée en matière thermoplastique.

## Claims

1. A liner (10) for a grille (12), the liner being designed to be positioned above a bumper shield (20), said shield (20) having a top rim (22), the liner including means (26) for supporting the top rim (22) of the shield, **characterized in that** the lines includes localized energy-absorber means (32) on the liner (10) suitable for being level with the high portion of a pedestrian's leg or the head of a child when said liner (10) is mounted on a vehicle.

2. A grille liner (10) according to claim 1, in which the means (26) for supporting the top rim (22) of the shield (20) form a transverse beam (27) constituting a bearing surface level with the femur of a pedestrian's leg when the liner (10) is mounted on a vehicle.

3. A grille liner (10) according to claim 1 or claim 2, in which the means (26) for supporting the top rim (22) of the shield (20) comprise a bottom shelf (28) extending over the entire length of the grille (12) and providing a support surface for the top rim (22) of the shield (20).

4. A grille liner (10) according to any preceding claim, in which the bottom shelf (28) includes at least one longitudinal reinforcing rib (30) extending substantially perpendicularly to said bottom shelf (28).

5. A grille liner (10) according to any preceding claim, of a shape that fits substantially closely to the inside shape of the grille (12).

6. A grille liner (10) according to any preceding claim, including fastener means (14) for fastening to the vehicle.

7. A grille liner (10) according to claim 6, in which the fastener means (14) for fastening on the vehicle are means for fastening to a front panel (16) of the vehicle.

8. A grille liner (10) according to claim 7, in which the means (14) for fastening to the front panel (16) are suitable for breaking in the event of the liner (10) being subjected to a force greater than a predetermined force, corresponding to a Danner impact.

9. A grille liner (10) according to any preceding claim, the liner being concave in shape and being shaped in such a manner as to be capable of flattening in the event of being subjected to a force greater than a predetermined threshold, corresponding to a Danner impact.

10. A grille liner (10) according to any one of claims 7 to 9, including, in its bottom portion, bearing ends (24) for bearing against the front panel (16) and shaped so as to escape downwards or sideways so as to preserve the front panel (16) and/or members mounted thereon such as a radiator in the event of the liner (10) being subjected to a force greater than a predetermined force, corresponding to a Danner impact.

11. A grille liner (10) according to claim 10, in which the bearing ends (34) are shaped to escape downwards or sideways in such a manner that a horizontal force exerted on said bearing ends (34) causes them to tilt in a desired direction.

12. A grille liner (10) according to claim 11, in which each of the bearing ends (34) is of chamfered shape.

13. A grille liner (10) according to claim 1, in which the energy-absorber means (34) comprise an array of ribs.

14. A grille liner (10) according to any preceding claim, and made of thermoplastic material.

## Patentansprüche

1. Innenverkleidung (10) eines Kühlergrills (12), die zum Anordnen oberhalb der Abdeckung (20) eines Stoßfängers vorgesehen ist, wobei die Abdeckung (20) einen oberen Rand (22) aufweist, wobei die Innenverkleidung Mittel (26) zum Abstützen des oberen Rands (22) der Abdeckung aufweist, **dadurch gekennzeichnet, dass** sie Enorgicaufnahmemittel (32) aufweist, die derart an der Innenverkleidung(10) angeordnet sind, dass sie sich auf Höhe des oberen Teils des Beins eines Fußgängers oder des Kopfs eines Kindes befinden, wenn die Innenverkleidung (10) am Fahrzeug montiert ist.

2. Innenverkleidung (10) eines Kühlergrills (12) nach Anspruch 1, bei der die Mittel (26) zum Abstützen des oberen Rands (22) der Abdeckung (20) einen Querträger (27) bilden, der eine Stütze auf Höhe des Oberschenkelknochens des Beins eines Fußgängers bildet, wenn die Innenverkleidung (10) am Fahrzeug montiert ist.

3. Innenverkleidung (10) eines Kühlergrills (12) nach Anspruch 1 oder 2, bei der die Mittel (26) zum Abstützen des oberen Rands (22) der Abdeckung (20) einen unteren Bereich (28) aufweisen, der sich über die gesamte Länge des Kühlergrills (12) erstreckt und eine Auflagefläche für den oberen Rand (22) der Abdeckung (20) bietet.

4. Innenverkleidung (10) eines Kühlergrills (12) nach einem der vorhergehenden Ansprüche, bei der der untere Bereich (28) wenigstens eine zu diesem unteren Bereich (28) im Wesentlichen senkrechte Verstärkungslängsrippe (30) aufweist.

5. Innenverkleidung (10) eines Kühlergrills (12) nach einem der vorhergehenden Ansprüche mit einer allgemeinen Form, die sich im Wesentlichen der inneren Form des Kühlergrills (12) anpasst.

6. Innenverkleidung (10) eines Kühlergrills (12) nach einem der vorhergehenden Ansprüche, die Mittel (14) zur Befestigung am Fahrzeug aufweist.

7. Innenverkleidung (10) eines Kühlergrills (12) nach Anspruch 6, bei der die Mittel (14) zur Befestigung am Fahrzeug Mittel zur Befestigung an einer vorderen technischen Fläche (16) des Fahrzeugs sind.

8. Innenverkleidung (10) eines Kühlergrills (12) nach Anspruch 7, bei der die Mittel (14) zur Befestigung an der vorderen technischen Fläche (16) reißen können, wenn die Innenverkleidung (10) einer Kraft ausgesetzt wird, die eine vordefinierte Kraft, die einem Danner-Aufprall entspricht, überschreitet.

9. Innenverkleidung (10) eines Kühlergrills (12) nach einem der vorhergehenden Ansprüche, die eine konkave Form aufweist und derart gestaltet ist, dass sie eingedrückt werden kann, wenn sie einer Kraft ausgesetzt wird, die eine vordefinierte Kraft, die einem Danner-Aufprall entspricht, überschreitet.

10. Innenverkleidung (10) eines Kühlergrills (12) nach einem der Ansprüche 7 bis 9, die in ihrem unteren Teil Enden (34) zur Anlage an der vorderen technischen Fläche (16) aufweist, die so gestaltet sind, dass sie nach unten oder seitlich ausbrechen, wobei die vordere technische Fläche (16) und/oder an dieser montierte Elemente wie etwa ein Kühler unbeschädigt erhalten bleiben, wenn die Innenverkleidung (10) einer Kraft ausgesetzt wird, die eine vordefinierte Kraft, die einem Danner-Aufprall entspricht, überschreitet.

11. Innenverkleidung (10) eines Kühlergrills (12) nach Anspruch 10, bei der die Gestaltung der Anlageenden (34), die das Ausbrechen nach unten oder in seitlicher Richtung ermöglicht, so ist, dass eine auf die Anlageenden (34) ausgeübte horizontale Kraft das Kippen der Enden in eine gewünschte Richtung bewirkt.

12. Innenverkleidung (10) eines Kühlergrills (12) nach Anspruch 11, bei der die Anlageenden (34) jeweils eine abgeschrägte Form haben.

13. Innenverkleidung (10) eines Kühlergrills (12) nach Anspruch 1, bei der die Energieaufnahmemittel (34) ein Rippennetzwerk aufweisen.

14. Innenverkleidung (10) eines Kühlergrills (12) nach einem der vorhergehenden Ansprüche, die aus thermoplastischem Material hergestellt ist.
